# EUROPEAN PATENT SPECIFICATION

(11) **EP 1 439 101 B1**
(45) Date of publication and mention of the grant of the patent: **07.06.2006**
(21) Application number: 04000786.6
(22) Date of filing: 15.01.2004
(51) Int. Cl.: B60R 25/04

(54) **Key operated antitheft device**
Schlüsselbetätigte Diebstahlsicherung
Dispositif antivol actionné par une clé

(30) Priority: 17.01.2003 JP 2003008986; 17.01.2003 JP 2003009091; 17.01.2003 JP 2003009030; 05.01.2004 US 707689
(43) Date of publication of application: 21.07.2004
(73) Proprietor: Kabushiki Kaisha MORIC, Shuchi-gun, Shizuoka-ken (JP)
(72) Inventor: Yamamoto, Masayuki, Shuchi-gun Shizuoka-ken (JP); Sugio, Midori, Shuchi-gun Shizuoka-ken (JP)
(74) Representative: TBK-Patent

(56) References cited:
- EP-A- 0 685 620
- US-A1- 2002 067 247
- US-B1- 6 181 025

## Description

### Background of Invention

This invention relates to a key operated vehicle antitheft device and more particularly to a compact and highly efficient antitheft device that is easily mounted on a vehicle such as a motorcycle without adversely affecting its performance.

A very successful anti theft system and structure therefore is shown in Japanese Published Patent Application JP-A-2001-71867, published March 21, 2001 and its US equivalent U S Letters Patent 6,525,433, Issued February 25, 2003. With that system a vehicle an anti-theft immobilizer has a main switch body mounted to the vehicle body. A ring-shaped antenna coil is mounted in the vicinity of a key receiving opening of the tumbler of the main switch. The associated key has a transponder built in thee grip part of the key. A control circuit receiving via the antenna coil and identifies an ID code transmitted by the transponder. If the ID code is registered in the transponder when the key is inserted and turned ON the engine start is permitted. However, if the key is determined to be a false one, engine start is prohibited.

When mounting this immobilizer to a vehicle body, it is necessary to arrange the main switch body and the immobilizer in the vehicle body in a compact. In particular and specifically for a vehicle such as a motorcycle, the available space is limited. In a motorcycle, the key cylinder is typically disposed in the vicinity of an upper bracket connecting left and right front forks.

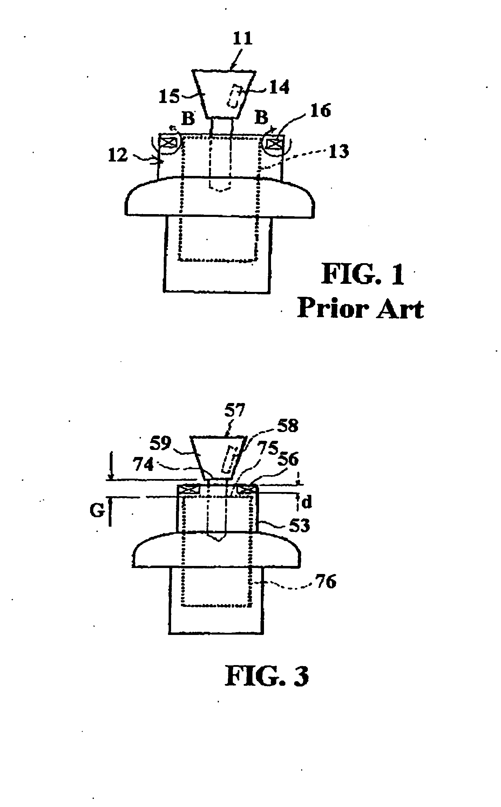

A disadvantage of this prior art construction can be best understood by reference to FIG. 1, which is a side elevational view of the assembly with a key, indicated at 11, inserted. A main switch (not shown) is built in a main switch body, indicated at 12 and which includes a lock tumbler 13. The key11 is inserted into the receiving opening of the tumbler 13 of the main switch body 12. The key 11 has a transponder 14 embedded in a hand grip part 15 of the key 11.

A ring-shaped antenna coil 16encircles the end part of the key receiving opening (at an upper end surface in the drawing) of the tumbler 13 and is embedded in the main switch body 12. This antenna coil 16 is formed with a substantial number of turns. When electric current is applied to the antenna coil 16 from the power voltage of a battery, magnetic flux shown by an arrow "B" flows around the antenna coil 16. Thereby, the electromagnetic energy is generated and forwarded to the transponder 14.

In order to obtain a large electromagnetic energy, it is necessary to expand magnetic field by increasing magnetic flux "B". Thus, it is necessary to widen the space between the flow path of the magnetic flux from the antenna coill 6 and the tumbler body 13. That is, the antenna coil 16 needs to be spaced from the tumbler body 12 as much as possible in order to minimize influence of the ferromagnetic material while maximizing the flow path of the magnetic flux. As a result, a diameter of the antenna coil 16 is increased as is the entire main switch body 12. However, this enlarged diameter of the antenna coil 16 may result in a problem of difficult mounting of the antenna coil 16 to the vehicle body. In addition, it compromises the layout of surrounding parts.

In addition to the interference of the flux path by the tumbler body 12, it is attached to the vehicle by fasteners that are juxtaposed to the antenna coil and which are also formed from ferromagnetic material. This further interferes with the flux path and makes a greater number of windings necessary further increasing the size.

Further to these problems, the construction as described is rather difficult because of its size and shape to conveniently mount on a small, compact vehicle such as a motorcycle.
Document EP-A-0 685 620 showing the features of the preamble of claim 1 discloses a key lock device for use in vehicle engine ignition comprising signal transmitting/receiving coils provided on a key and a key cylinder respectively for transmitting and receiving radiowave signals between each other upon insertion of the key into the key cylinder, to judge the authenticity of the key, wherein the coiled antenna is wound coaxially around the key cylinder, and the coils provided on the key is housed integrally in the grip portion of the key so as to situate coaxially with the coiled antenna wound around the key cylinder when a key shank is inserted into the key cylinder. A holding member is formed integrally to the inside of a grip portion of the key, and the coiled antenna provided on the key is housed in the holding member. The coiled antenna wound around the key cylinder is insert-molded in the cover member coaxially with a key-inserting axial line.

### SUMMARY OF INVENTION

It is, therefore, a principle object of the invention to provide an improved, compact, high efficiency and low cost key operated vehicle antitheft device.

It is a further object of the invention to provide key operated vehicle antitheft device that has a compact but highly efficient antenna coil.

It is a yet further object of the invention to provide key operated vehicle antitheft device that can be easily mounted on a small vehicle such as a motorcycle.

These objects are achieved by a key operated vehicle antitheft device according to claim 1. Advantageous further developments are as set out in the dependent claims.

In a specific example of the invention the antenna coil is disposed in a spaced relation from the key tumbler.

In another specific example of the invention the antenna coil is disposed in a spaced relation from the mounting fasteners of the device.

According to another aspect of the invention, the body of the key operated vehicle antitheft device is mounted to an upper bracket that joins the forks of a motorcycle.

### Brief Description of Drawings

FIG. 1 is a side elevational view of a prior art construction to illustrate the problem solved by the present invention.

FIG. 2 is a partially schematic view illustrating how the invention is incorporated in a complete vehicle.

FIG. 3 is a side elevational view, in part similar to FIG. 1, but shows a feature of the present invention.

FIG. 4 is a side elevational view, showing the relation between the antenna coil and the associated circuit.

FIG. 5 is an exploded perspective view of the device.

FIG. 6 is a side elevational view, in part similar to FIG. 3, but showing more details of the actual construction.

FIG. 7 is a top plan view of the device.

FIG. 8 is a side elevational view taken at 90°to that of FIG. 6, but with the key removed.

FIG. 9 is an exploded view showing how the device is mounted on a motorcycle.

FIG. 10 is a top plan view of the mounted device.

FIG. 1 is a cross sectional view of the mounted device.

### Detailed Description

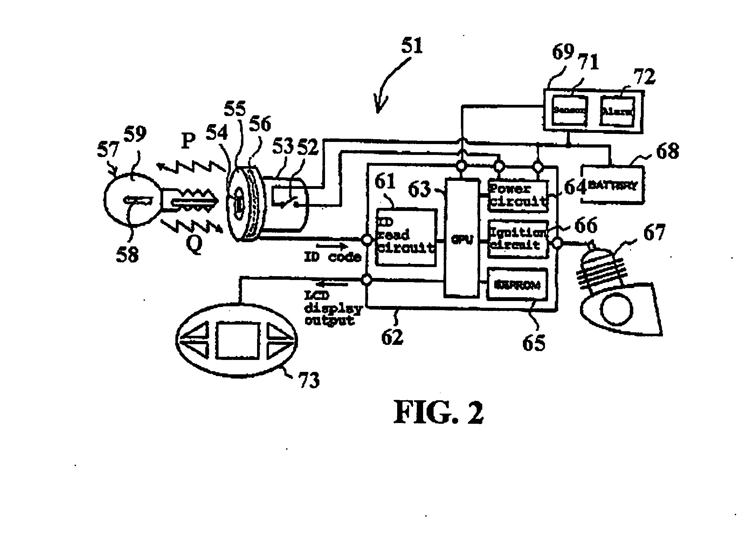

Referring now in detail to the drawings and initially to FIG. 2, this is an overall schematic diagram showing key operated vehicle antitheft device of the present invention. The main unit is identified generally by the reference numeral 51 and includes a main switch 52 contained within a main switch body 53. A key receiving hole 54 is formed in the end surface of the main switch body 53.

An enlarged case portion 55 housing an antenna coil 56 is provided at the peripheral part of the end surface of the main switch body 53 around the key receiving hole 54. The antenna coil 56 is a ring-shaped coil. When a key 57 is inserted into the key receiving hole 54 and into a tumbler thereof and turned, the main switch 52 is turned ON/OFF. A transponder 58 is embedded in a hand grip part 59 of the key 57. An ID code is registered in the transponder 58. The transponder 58 receives electromagnetic energy from the antenna coil 56 as shown by an arrow P and uses it as power source to transmit an ID code signal as shown by an arrow Q. The ID code signal received by the antenna coil 56 is forwarded to an ID reading circuit 61 in a control circuit unit 62 of the key operated vehicle antitheft device main unit 51.

Except as hereinafter noted, the control circuit unit 62 is formed on a sheet of printed circuit board that is not shown in this drawing. This printed circuit board (control circuit board) is integrated with the antenna coil 56 within the case 55 to form the key operated antitheft device main unit 51. An key operated antitheft device integrally combining (shown separately in FIG. 2) the antenna coil 56 within the case 55 with the printed circuit board forming the control circuit unit 62 is further integrally combined with the main switch body 53 as will be described later in order to form an immobilizer/main switch assembly.

Continuing to refer mainly to FIG. 2, the control circuit unit 62 includes the ID reading circuit 61, a CPU 63, a power circuit 64, and an EEPROM 65 that cooperate to control an ignition circuit 66. The ignition circuit 66 preferably is formed separately from the printed circuit board but is shown schematically as part of the control circuit unit in FIG. 2 for simplification.

The ID reading circuit 61 reads the key ID code signal received by the antenna coil 56 and regulates electric current supplied to the antenna coil 56 for sending electromagnetic energy from the coil to the transponder 58.

The CPU 63 then compares the received ID code with an authorized ID code pre-registered in the EEPROM 65 in order to determine whether or not the key 57 is the right one. If the key is determined to be the right key, ignition of an engine 67 is permitted through the ignition circuit 66 to start the engine 67. If the key is determined to be a false one, ignition of the engine 67 by the ignition circuit 66 is prohibited and the engine 67 is not allowed to start.

The power circuit 64 receives voltage from a battery 68 through the main switch 52 and supplies predetermined voltage to each circuit within the control circuit unit 62 through the CPU 63. This power circuit 64 includes a self-holding circuit (not shown) that allows itself to operate for a predetermined duration after the main switch 52 is turned OFF.

The CPU 63 is connected to an alarm unit 69 through an interface circuit (not shown). The alarm unit 69 includes an inclination sensor 71 for detecting inclination and vibration of a vehicle and an alarm 72 such as siren and lamp. When the vehicle leans or vibrates when it is in an alarm state (when the anti-theft system is in an operable state), the inclination sensor 71 detects the motion and activates the siren 72. However, if the control circuit unit 62 determines that the key 57 is the right one, the CPU 63 sends an alarm release signal to the alarm unit 69 to stop the siren.

The CPU 63 is connected to a display 73 for displaying the operating state of the immobilizer (anti-theft system) to an operator.

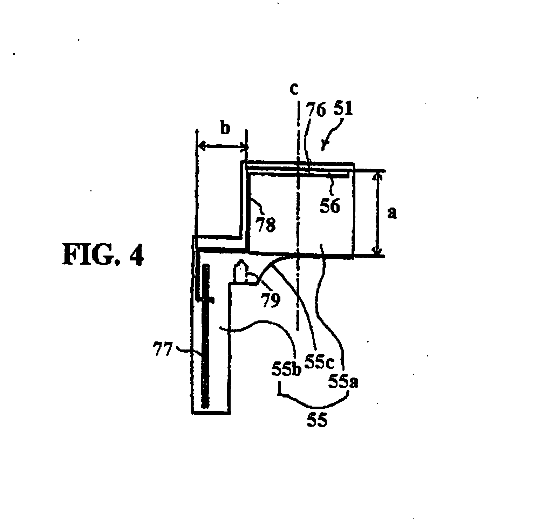

Before describing in more detail the actual physical construction of the key operated antitheft device main unit 51, by reference to FIGS. 4-8, its size compared to the prior art construction of FIG. 1 may be understood by reference to FIG. 3. As seen in this figure, the thickness "d" of the antenna coil 56 is smaller than a gap "G" between an end rim 74 of the grip part 59 of the key 57 and the end surface 75 around the key insertion hole of a tumbler body 76 of the main switch body 53. Thereby, the inner diameter side of the antenna coil 56 can be as close as possible to the key 57, allowing a reduction in the outer diameter of the main switch body 53 as compared with the prior art construction in FIG. 1.

The detailed construction of the key operated antitheft device main unit 51 will now be described by reference to FIGS. 4-8. Referring first to FIG. 4 and as already described, it includes a printed circuit board 77, as previously stated but not previously shown. On this printed circuit board 77 are formed the control circuit unit 62 and a connection for connecting the antenna coil 56. These elements are mounted in the case 55 as a unit.

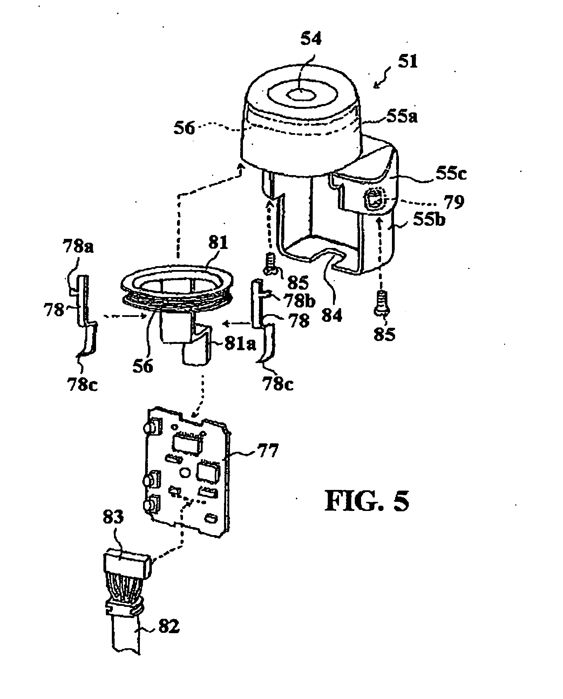

The case 55 comprises a resin-molded body including a cylindrical part 55a and a box part 55b coupled with the outer periphery at the end of the cylindrical part 55a. The inner periphery of the box part 55b is opened as shown in FIG. 5, which will be described later. The ring-shaped antenna coil 56 is mounted concentrically with an axis C in the end of the cylindrical part 55a that is on the opposite side of the box part 55b. The printed board 77 is disposed in parallel to the axis C within the box part 55b.

The antenna coil 56 is connected to the printed circuit board 77 through a terminal member 78 comprised of a bent metallic plate. In this embodiment, a length "a" of the terminal member 78 within the cylindrical part 55a to the point at which the terminal member 78 is bent (substantially corresponding to the length in the axial direction of the cylindrical part 55a) is longer than a length "b" of the bent part of the terminal member 78 (substantially corresponding to the projecting length toward the outer periphery of the box part 55b). Thereby, installation of the key operated antitheft device main unit 51 to a later-described upper bracket of front forks can be carried out efficiently in terms of space without interfering with other parts within a narrow space.

Bolt mounting holes 79 for coupling with other parts are formed in both sides of the side surface of a projecting part 55c of the main switch body 55.

Referring now primarily to the exploded view of FIG. 5, it will be seen that the antenna coil 56 is wound around a ring-shaped bobbin 81 made of molded resin. The terminal member 78actually comprises a pair of members that are mounted on both sides of a connection piece 81 a made of molded resin integrated with the bobbin 81. In each terminal member 78, one of the pin terminals 78a and 78b are provided to which the beginning and the ending of the coil 56 is connected.

After the antenna coil 56 wrapped around the bobbin 81 and the terminal members 78 are connected and assembled, this assembly is set within a die for molding the main switch case portion55 to form a molded body integrated with the main switch body53. After the molding is completed, the printed board 77 is fitted into the main switch body part 55b. When this is done, a projection 78c of the terminal members78 extends through a hole formed in the printed board 77. These top projections78c are soldered so that the printed board 77 is secured within the main switch body part 55b and the electrical connections are completed.

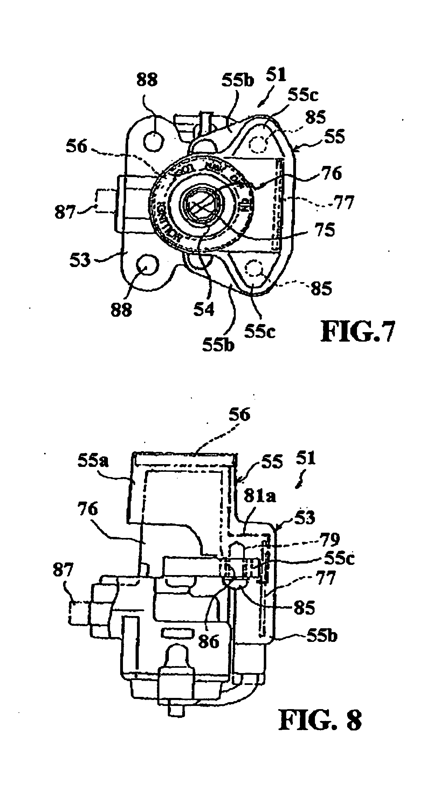

A cable 82 is connected to the printed board 77 through a connector 83. A cut-away portion 84 for inserting the cable 82 is formed at the bottom of the main switch body part 55b of the main switch case portion55. The hole 54 for inserting the key 57 is formed in the central part of the top surface of the cylindrical part 55a of the case 55. When the main switch case portion55 is assembled, the key receiving hole54 is exposed (see FIG. 7).

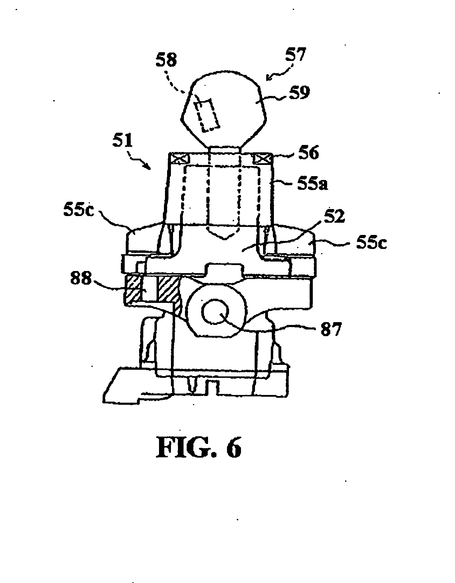

How the main switch body 53 is affixed to the remainder of the main switch 52 as well as further details of the main unit 51 may be best understood by reference to FIGS. 6-8. As previously noted, the assembled main switch body 53, is coupled to the main switch 52, by bolts 85 (see FIGS. 7 and 8). Each bolt 85 is screwed into the bolt mounting hole 79 of the projecting part 55c integrally formed in both sides of the side surface of the box part 55b of the case 55, whereby the main switch 52 is coupled with the main switch body 53 to form the main unit 51.

As previously mentioned, the antenna coil 56 is housed in the case portion 55, for example embedded in a molded resin. The case portion 55 includes the printed board 77 forming the control circuit unit 62 of the main unit 51. The case portion 55 including the antenna coil 56 and the printed board 77 forming the control circuit unit 62 are integrated by the molded resin to form the main unit 51.

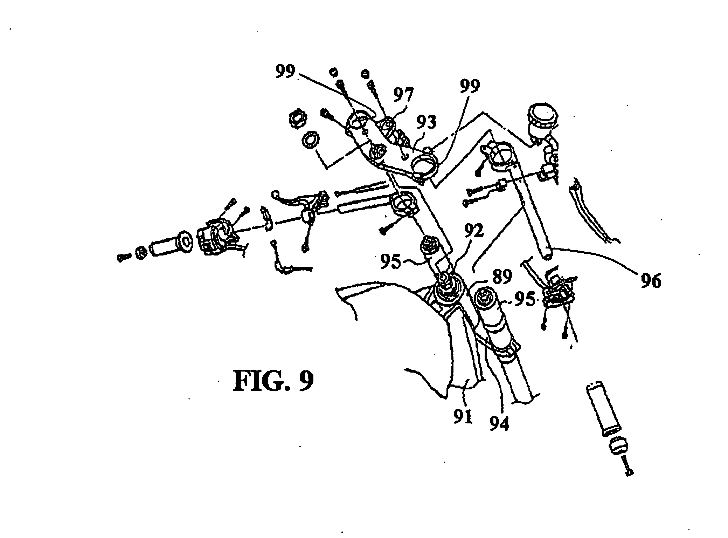

Further, the main switch 52 and main switch body are integrally coupled by the bolts 85 (FIG. 9) to form a single unit. As noted, the bolt mounting holes 79 are formed in the projecting parts55c formed in both sides on the side surface of the box part 55b. As seen in FIG. 8, each bolt 85 extends through a through hole 86 formed in the projecting part 55c of the main switch body 53 and is screwed into the bolt mounting hole 79. Since the bolt mounting holes79are spaced from the antenna coil 56 of the cylindrical part 55a, the magnetic influence of the metallic bolt 79on the coil 56 is reduced or substantially eliminated. Also the tumbler body 76 is spaced from the coil 56 as seen in FIG. 3 so that the magnetic influence of its ferromagnetic components on the coil 56 is reduced or substantially eliminated.

An anti-theft handle lock 87 is provided for preventing rotation of a steering shaft (not shown) of the handlebar when the associated motorcycle is parked. As shown in FIGS. 6 -8, the main switch body 53 has a bolt insertion holes88 for securing the main unit 51 to the vehicle (for example to an upper bracket for connecting front forks of a front wheel) as will be described later by reference to FIGS 9-11.

Also, the formation of one collective assembly part by integrally arranging the main switch body 53, the antenna coil 56, and the printed board 77 forming the control circuit unit allows easy handling and facilitates parts management.

Referring now to FIGS. 9-11, these figures show the frame structure of a front section of the body of the motorcycle to which the collective assembly part of the main unit 51 is mounted. The motorcycle has a head pipe 89 is secured to a main frame91 forming the front section of the motorcycle body.

A steering shaft 92 is dirigibly supported by the head pipe 89. An upper bracket 93 and a lower bracket 94 are secured on both upper and lower ends of the steering shaft 92. Left and right front forks 95 are inserted and secured to the upper and lower brackets 93 and 94. The left and right front forks 95 are coupled to both sides of a wheel shaft of the front wheel (not shown) in a known manner. Handlebars 96 are secured to the upper bracket 93. By operating the handlebars 96, the upper bracket 93 integrated with the handlebars 96, the steering shaft 92, and the lower bracket 94 are rotated relative to the head pipe 89 secured to the vehicle body. Thereby, the front forks 95 are steered with the front wheel relative to the vehicle body to change the vehicle direction.

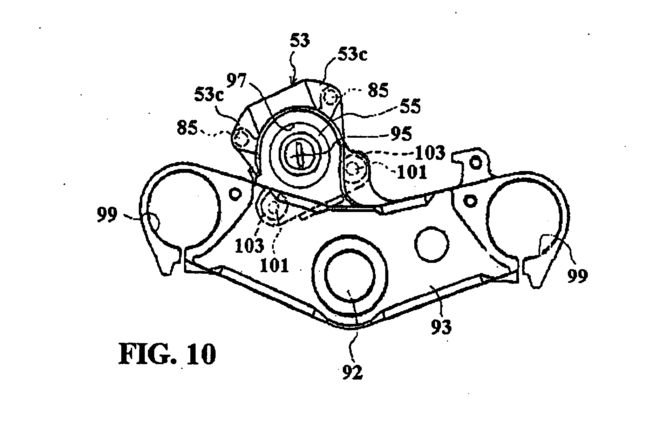

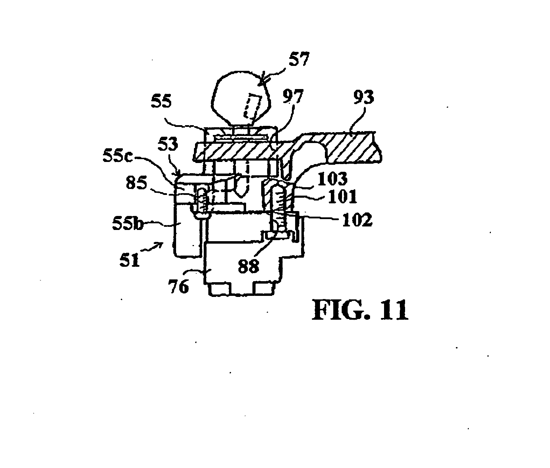

The upper bracket 93 has a mounting hole 97 for mounting the main unit 5 1 and specifically the main switch body 53. This mounting arrangement is best shown in FIGS. 10 and 11. As seen there, the central part of the upper bracket 93 is formed with a hole 98 for inserting and securing the steering shaft. At both ends of the upper bracket 93, holes 99 are formed for inserting and securing the front forks 95.

The cylindrical part 55a of the main switch body 53 is fitted into the mounting hole 97 of the upper bracket 93 and secured there by bolts 101. The bolts 101 are screwed through the bolt insertion holes88 of the main switch body 53 into a screw hole formed in a boss integrally formed with the lower side of the upper bracket 93. Thereby, the main unit 51 is secured to the upper bracket 93.

Thus from the foregoing description it should be readily apparent that the construction allows the formation of a compact and unitary key operated vehicle antitheft device. In addition, electromagnetic influence over the antenna coil by the ferromagnetic components and mounting bolts is substantially reduced. Of course those skilled in the art will readily understand that the described construction is that of a preferred embodiment and various changes and modifications therefrom can be made without departing from the scope of the invention, as defined by the appended claims.

## Claims

1. A key operated vehicle antitheft device for cooperation with a key (57) having a key portion and a transponder (58), said antitheft device being comprised of
a tumbler (76) having a key receiving opening(54) adapted to receive the key (57),
an antenna coil (56) for receiving the signal of the key transponder (58) and
a circuit (77) including a receiver (61) for sensing and recognizing the output of said transponder,
wherein said antenna coil (56) is connected to the circuit (77) by a terminal member and is disposed in a spaced relation from any ferromagnetic portion of said key operated vehicle antitheft device different to the terminal member (78) in the direction from which the key (57) is inserted into said key receiving opening (54), and
wherein the antenna coil (56), the tumbler (76) and the circuit (77) are formed in a common unit (51) adapted to be mounted on a vehicle,
**characterized in that** the common unit (51) includes a threaded opening (88, 93) for receiving a fastener (101) for affixing the key operated vehicle antitheft device to the associated vehicle.

2. A key operated vehicle antitheft device as set forth in claim 1, wherein the circuit (77) includes an immobilizer portion for preventing operation of the vehicle even if the key (57) is turned in the tumbler (76) in the event that the circuit (77) does not recognizing the output of the transponder (58).

3. A key operated vehicle antitheft device as set forth in claim 1, wherein the antenna coil (56) is disposed in a spaced relation to the threaded opening (88, 93) in the direction from which the key (57) is inserted into said key receiving opening (54).

4. A key operated vehicle antitheft device as set forth in claim 1, wherein the antenna coil (56) is disposed in a spaced relation to the key receiving opening (54) in the direction from which the key (57) is inserted into said key receiving opening (54).

5. A key operated vehicle antitheft device as set forth in claim 1, wherein the circuit (77) is contained in a projecting portion (55) of a housing forming part of the unit (51) and integrally containing the antenna coil (56).

6. A key operated vehicle antitheft device as set forth in claim 5, wherein the projecting portion (55) of the housing carries a board (77) on which the circuit is formed.

7. A key operated vehicle antitheft device as set forth in claim 6, wherein the unit includes a pair of threaded openings (88, 93) for receiving fasteners (101) for affixing the key operated vehicle antitheft device to the associated vehicle, said fastener openings (88, 93) being formed at the end of said projecting portion opposite from the antenna coil(56).

8. A key operated vehicle antitheft device as set forth in claim 7, wherein the housing is formed from a molded resin
in which the antenna coil (56) is molded.

9. A key operated vehicle antitheft device as set forth in claim 8, wherein the antenna coil (56) is wound around a bobbin (81) that is molded into the housing and which bobbin (81) has a projecting part fitted into the circuit board (77) to connect the bobbin (81) to the circuit board (77).

10. A key operated vehicle antitheft device as set forth in claim 9, wherein the antenna coil (56) is electrically connected to a pair of terminals affixed to the sides of the bobbin projecting part and which terminals provide an electrical connection to the circuit on the circuit board (77).

11. A key operated vehicle antitheft device as set forth in claim 7, in combination the associated vehicle which comprises a motorcycle and the key operated vehicle antitheft device is affixed to a steering mechanism (92) of the motorcycle.

12. The combination of claim 11, wherein the steering mechanism comprises a bracket (93, 94) affixed to a pair of front forks(95) and the key operated vehicle antitheft device is affixed to the upper side of the bracket (93) by fasteners (101) threaded into the pair of threaded openings.

13. The combination of claim 12, wherein the key operated vehicle antitheft device actuates a locking pin for preventing steering of the forks (95).

## Patentansprüche

1. Schlüsselbetätigte Fahrzeugdiebstahlsicherungsvorrichtung für ein Zusammenwirken mit einem Schlüssel (57), der einen Schlüsselabschnitt und einen Transponder (58) aufweist,
wobei die Diebstahlsicherungsvorrichtung umfasst:
eine Zuhaltung (76), die eine Schlüsselempfangsöffnung (54) zum Empfangen des Schlüssels (57) aufweist,
eine Antennenspule (56) zum Empfangen des Signals des Schlüsseltransponders (58) und
eine Schaltung (77), die eine Empfangseinrichtung (61) zum Erfassen und Erkennen des Ausgangssignals des Transponders umfasst,
wobei die Antennenspule (56) mit der Schaltung (77) durch ein Anschlusselement verbunden ist und in einer Abstandsbeziehung zu jedem ferromagnetischen Abschnitt der schlüsselbetätigten Fahrzeugsdiebstahlsicherungsvorrichtung, der zu dem Anschlusselement (78) unterschiedlich ist, in der Richtung angeordnet ist, von der der Schlüssel (57) in die Schlüsselempfangsöffnung (54) eingeführt wird, und
wobei die Antennenspule (56), die Zuhaltung (76) und die Schaltung (77) in einer gemeinsamen Einheit (51) ausgebildet sind, die angepasst ist, bei einem Fahrzeug angebracht zu werden,
**dadurch gekennzeichnet, dass**
die gemeinsame Einheit (51) eine mit einem Gewinde versehene Öffnung (88, 93) zum Empfangen einer Halterung (101) für eine Befestigung der schlüsselbetätigten Fahrzeugdiebstahlsicherungsvorrichtung an das zugehörige Fahrzeug umfasst.

2. Schlüsselbetätigte Fahrzeugdiebstahlsicherungsvorrichtung nach Anspruch 1,
wobei die Schaltung (77) einen Wegfahrsperrenabschnitt zur Verhinderung eines Betriebs des Fahrzeugs, auch wenn der Schlüssel (57) in der Zuhaltung (76) gedreht wird, in dem Fall, dass die Schaltung (77) das Ausgangssignal des Transponders (58) nicht erkennt, umfasst.

3. Schlüsselbetätigte Fahrzeugdiebstahlsicherungsvorrichtung nach Anspruch 1,
wobei die Antennenspule (56) in einer Abstandsbeziehung zu der mit einem Gewinde versehenen Öffnung (88, 93) in der Richtung angeordnet ist, von der der Schlüssel (57) in die Schlüsselempfangsöffnung (54) eingeführt wird.

4. Schlüsselbetätigte Fahrzeugdiebstahlsicherungsvorrichtung nach Anspruch 1,
wobei die Antennenspule (56) in einer Abstandsbeziehung zu der Schlüsselempfangsöffnung (54) in der Richtung angeordnet ist, von der der Schlüssel (57) in die Schlüsselempfangsöffnung (54) eingeführt wird.

5. Schlüsselbetätigte Fahrzeugdiebstahlsicherungsvorrichtung nach Anspruch 1,
wobei die Schaltung (77) in einem herausragenden Abschnitt (55) eines Gehäuses beinhaltet ist, das einen Teil der Einheit (51) bildet und die Antennenspule (56) integral beinhaltet.

6. Schlüsselbetätigte Fahrzeugdiebstahlsicherungsvorrichtung nach Anspruch 5,
wobei der herausragende Abschnitt (55) des Gehäuses eine Platine (77) trägt, auf der die Schaltung ausgebildet ist.

7. Schlüsselbetätigte Fahrzeugdiebstahlsicherungsvorrichtung nach Anspruch 6,
wobei die Einheit ein Paar von mit einem Gewinde versehenen Öffnungen (88, 93) für ein Empfangen von Halterungen (101) für eine Befestigung der schlüsselbetätigten Fahrzeugdiebstahlsicherungsvorrichtung an das zugehörige Fahrzeug umfasst, wobei die Halterungsöffnungen (88, 93) bei dem Ende des herausragenden Abschnitts entgegengesetzt zu der Antennenspule (56) ausgebildet sind.

8. Schlüsselbetätigte Fahrzeugdiebstahlsicherungsvorrichtung nach Anspruch 7,
wobei das Gehäuse aus einem geformten Harz ausgebildet ist, in das die Antennenspule (56) eingeformt ist.

9. Schlüsselbetätigte Fahrzeugdiebstahlsicherungsvorrichtung nach Anspruch 8,
wobei die Antennenspule (56) um einen Spulenkörper (81) gewickelt ist, der in das Gehäuse eingeformt ist, wobei der Spulenkörper (81) ein herausragendes Teil aufweist, das in die Schaltungsplatine (77) eingepasst ist, um den Spulenkörper (81) mit der Schaltungsplatine (77) zu verbinden.

10. Schlüsselbetätigte Fahrzeugdiebstahlsicherungsvorrichtung nach Anspruch 9,
wobei die Antennenspule (56) mit einem Paar von Anschlüssen, die bei den Seiten des herausragenden Spulenkörperteils befestigt sind, elektrisch verbunden ist, wobei die Anschlüsse eine elektrische Verbindung mit der Schaltung auf der Schaltungsplatine (77) bereitstellen.

11. Schlüsselbetätigte Fahrzeugdiebstahlsicherungsvorrichtung nach Anspruch 7 in Kombination mit dem zugehörigen Fahrzeug, das ein Motorrad umfasst, wobei die schlüsselbetätigte Fahrzeugdiebstahlsicherungsvorrichtung an einen Lenkmechanismus (92) des Motorrads befestigt ist.

12. Die Kombination nach Anspruch 11, wobei der Lenkmechanismus einen Träger (93, 94) umfasst, der an ein Paar von Vordergabeln (95) befestigt ist, und die schlüsselbetätigte Fahrzeugdiebstahlsicherungsvorrichtung bei der oberen Seite des Trägers (93) durch Halterungen (101) befestigt ist, die in das Paar von mit einem Gewinde versehenen Öffnungen geschraubt sind.

13. Die Kombination nach Anspruch 12, wobei die schlüsselbetätigte Fahrzeugdiebstahlsicherungsvorrichtung einen Haltestift für ein Verhindern eines Lenkens der Gabeln (95) betätigt.

## Revendications

1. Dispositif antivol de véhicule actionné par une clé prévu pour coopérer avec une clé (57) ayant une partie de clé et un transpondeur (58), ledit dispositif antivol comprenant
une gorge (76) ayant une ouverture réceptrice de clé (54) conçue pour recevoir la clé (57),
une bobine d'antenne (56) pour recevoir le signal du transpondeur (58) de clé et
un circuit (77) comprenant un récepteur (61) pour détecter et reconnaître la sortie dudit transpondeur,
dans lequel ladite bobine d'antenne (56) est reliée au circuit (77) par un élément terminal et est disposée dans une relation espacée entre toute partie ferromagnétique dudit dispositif antivol de véhicule actionné par une clé différent et l'élément terminal (78) dans la direction à partir de laquelle la clé (57) est insérée dans ladite ouverture réceptrice de clé (54), et
dans lequel la bobine d'antenne (56), la gorge (76) et le circuit (77) sont formés dans une unité commune (51) conçue pour être montée sur un véhicule,
**caractérisé en ce que** l'unité commune (51) comprend une ouverture filetée (88, 93) pour recevoir une fixation (101) afin de fixer le dispositif antivol de véhicule actionné par une clé au véhicule associé.

2. Dispositif antivol de véhicule actionné par une clé selon la revendication 1, dans lequel le circuit (77) comprend une partie d'immobilisation pour empêcher le fonctionnement du véhicule même si la clé (57) est tournée dans la gorge (76) au cas où le circuit (77) ne reconnaît pas la sortie du transpondeur (58).

3. Dispositif antivol de véhicule actionné par une clé selon la revendication 1, dans lequel la bobine d'antenne (56) est disposée dans une relation espacée par rapport à l'ouverture filetée (88, 93) dans la direction à partir de laquelle la clé (57) est insérée dans ladite ouverture réceptrice de clé (54).

4. Dispositif antivol de véhicule actionné par une clé selon la revendication 1, dans lequel la bobine d'antenne (56) est disposée dans une relation espacée par rapport à l'ouverture réceptrice de clé (54) dans la direction à partir de laquelle la clé (57) est insérée dans ladite ouverture réceptrice de clé (54).

5. Dispositif antivol de véhicule actionné par une clé selon la revendication 1, dans lequel le circuit (77) est contenu dans une partie en saillie (55) d'un boîtier faisant partie de l'unité (51) et contenant intégralement la bobine d'antenne (56).

6. Dispositif antivol de véhicule actionné par une clé selon la revendication 5, dans lequel la partie en saillie (55) du boîtier porte une carte (77) sur laquelle le circuit est formé.

7. Dispositif antivol de véhicule actionné par une clé selon la revendication 6, dans lequel l'unité comprend une paire d'ouvertures filetées (88, 93) pour recevoir des fixations (101) afin de fixer le dispositif antivol de véhicule actionné par une clé au véhicule associé, lesdites ouvertures filetées (88, 93) étant formées à l'extrémité de ladite partie en saillie à l'opposé de la bobine d'antenne (56).

8. Dispositif antivol de véhicule actionné par une clé selon la revendication 7, dans lequel le boîtier est formé à partir d'une résine moulée dans laquelle la bobine d'antenne (56) est moulée.

9. Dispositif antivol de véhicule actionné par une clé selon la revendication 8, dans lequel la bobine d'antenne (56) est enroulée autour d'une bobine (81) qui est moulée dans le boîtier et laquelle bobine (81) a une partie en saillie placée dans la carte de circuit imprimé (77) pour connecter la bobine (81) à la carte de circuit imprimé (77).

10. Dispositif antivol de véhicule actionné par une clé selon la revendication 9, dans lequel la bobine d'antenne (56) est électriquement reliée à une paire de bornes fixées aux côtés de la partie en saillie de la bobine et lesquelles bornes fournissent une connexion électrique au circuit sur la carte de circuit imprimé (77).

11. Dispositif antivol de véhicule actionné par une clé selon la revendication 7, en combinaison avec le véhicule associé qui comprend une motocyclette et le dispositif antivol de véhicule actionné par une clé est fixé à un mécanisme de direction (92) de la motocyclette.

12. Combinaison selon la revendication 11, dans laquelle le mécanisme de direction comprend un support (93, 94) fixé à une paire de fourches avant (95) et le dispositif antivol de véhicule actionné par une clé est fixé sur le côté supérieur du support (93) par des fixations (101) filetées dans la paire d'ouvertures filetées.

13. Combinaison selon la revendication 12, dans laquelle le dispositif antivol de véhicule actionné par une clé actionne une broche de verrouillage pour empêcher la direction des fourches (95).
